# EUROPEAN PATENT SPECIFICATION

(11) **EP 4 311 074 B1**
(45) Date of publication and mention of the grant of the patent: **18.02.2026**
(21) Application number: 23786458.2
(22) Date of filing: 20.03.2023
(51) Int. Cl.: H02J 7/00, H01M 10/44

(54) **CHARGING METHOD AND APPARATUS FOR ENERGY STORAGE POWER SOURCE, AND DEVICE AND MEDIUM**
LADEVERFAHREN UND -VORRICHTUNG FÜR ENERGIESPEICHERSTROMQUELLE SOWIE VORRICHTUNG UND MEDIUM
PROCÉDÉ ET APPAREIL DE CHARGE POUR SOURCE D'ALIMENTATION À STOCKAGE D'ÉNERGIE, ET DISPOSITIF ET SUPPORT

(30) Priority: 12.04.2022 CN 202210382239
(43) Date of publication of application: 24.01.2024
(73) Proprietor: Shenzhen Hello Tech Energy Co., Ltd, Shenzhen City, Guangdong 518000 (CN)
(72) Inventor: AN, Xinxin, Shenzhen, Guangdong 518000 (CN); SUN, Zhongwei, Shenzhen, Guangdong 518000 (CN); SHEN, Gaosong, Shenzhen, Guangdong 518000 (CN); LUO, Feiyan, Shenzhen, Guangdong 518000 (CN); LIU, Chuzhu, Shenzhen, Guangdong 518000 (CN)
(74) Representative: Dehns Germany Partnerschaft mbB
(86) International application number: PCT/CN2023/082397
(87) International publication number: WO 2023/197830

(56) References cited:
- CN-A- 109 786 877
- CN-A- 109 818 396
- CN-A- 110 311 183
- CN-A- 111 261 962
- CN-A- 113 258 150
- CN-A- 114 744 713
- US-A1- 2017 194 796
- US-A1- 2020 006 960
- US-A1- 2022 077 510

## Description

### CROSS-REFERENCE TO RELATED APPLICATION

The present application claims priority to Chinese Patent Application No. 202210382239.4, filed with China National Intellectual Property Administration on April 12, 2022.

### FIELD

The present invention relates to new energy technologies, such as a charging method of an energy storage power supply, a charging apparatus therefor, a device, and a medium.

### BACKGROUND

A charging strategy for a portable energy storage power supply is usually a single charging strategy, which often results in a long charging period, high heating power consumption, and low charging efficiency. This leads to poor user experience. Moreover, an internal temperature of a battery is increased due to prolonged heating, significantly impacting safety and a cycle service life of the battery. In addition, when the portable energy storage power supply has a high charging current at a low temperature, there is a risk of lithium precipitation.

US2017/194796A1 is directed to a method for charging a battery pack. The method includes: detecting voltages of batteries in the battery pack in real time; charging the battery pack with a charging current that is at least based on the detected voltages; and determining whether a minimum battery voltage among the batteries in the battery pack is lower than a first voltage. If the minimum battery voltage is lower than the first voltage, a first charging policy is selected. Otherwise, other charging policies are selected.

### SUMMARY

The present invention provides a charging method of an energy storage power supply, a charging apparatus therefor, a device, and a medium according to the independent claims, to solve problems of low charging efficiency, a long charging period, and high heating power consumption in the related art, thereby improving safety and a service life of a battery.

The present invention provides a charging method of an energy storage power supply. The charging method includes: obtaining a voltage of each of a plurality of cells in a battery pack of a battery module; and charging the battery module by selecting, based on a minimum voltage among the voltages of the plurality of cells, a corresponding charging scheme. The corresponding charging scheme includes a first charging scheme and a second charging scheme. Said selecting, based on the minimum voltage among the voltages of the plurality of cells, the corresponding charging scheme comprises: discharging the battery module at a first constant power when the minimum voltage among the voltages of the plurality of cells is greater than or equal to a second predetermined value and smaller than a first predetermined value, and obtaining a first discharging period when the minimum voltage among the voltages of the plurality of cells is equal to a third predetermined value; performing the second charging scheme when the first discharging period is greater than or equal to a first predetermined duration; and performing the first charging scheme when the first discharging period is smaller than the first predetermined duration.

The present invention provides a charging apparatus for an energy storage power supply. The charging apparatus includes a cell voltage obtaining module and a scheme selection module. The cell voltage obtaining module is configured to obtain a voltage of each of a plurality of cells in a battery pack of a battery module. The scheme selection module is configured to charge the battery module by selecting, based on a minimum voltage among the voltages of the plurality of cells, a corresponding charging scheme. The corresponding charging scheme includes a first charging scheme and a second charging scheme. Said selecting, based on the minimum voltage among the voltages of the plurality of cells, the corresponding charging scheme comprises: discharging the battery module at a first constant power when the minimum voltage among the voltages of the plurality of cells is greater than or equal to a second predetermined value and smaller than a first predetermined value, and obtaining a first discharging period when the minimum voltage among the voltages of the plurality of cells is equal to a third predetermined value; performing the second charging scheme when the first discharging period is greater than or equal to a first predetermined duration; and performing the first charging scheme when the first discharging period is smaller than the first predetermined duration.

The present invention provides an electronic device. The electronic device includes at least one processor and a memory in communication connection with the at least one processor. The memory has a computer program stored thereon, and the computer program is executable by the at least one processor. The computer program, when executed by the at least one processor, causes the at least one processor to perform the above charging method of the energy storage power supply.

The present invention provides a computer-readable storage medium. The computer instructions, when executed by a processor, implement the above charging method of the energy storage power supply.

### BRIEF DESCRIPTION OF THE DRAWINGS

FIG. 1 is a flowchart of a charging method of an energy storage power supply according to an embodiment of the present disclosure.
FIG. 2 is a schematic diagram of a charging curve when performing a first charging scheme in a charging method of an energy storage power supply according to an embodiment of the present disclosure.
FIG. 3 is a schematic diagram of a charging curve when performing a second charging scheme in a charging method of an energy storage power supply according to an embodiment of the present disclosure.
FIG. 4 is a schematic diagram showing an effect of a charging method of an energy storage power supply according to an embodiment of the present disclosure.
FIG. 5 is a schematic block diagram of a charging apparatus for an energy storage power supply according to an embodiment of the present disclosure.
FIG. 6 is a schematic structural diagram of an electronic device according to an embodiment of the present disclosure.

### DETAILED DESCRIPTION

Reference will be made to technical solutions in embodiments of the present disclosure with accompanying drawings, and the embodiments described herein are only part of the embodiments of the present disclosure.

Terms, such as "first" and "second", as used in the description of the embodiments of the present disclosure, the appended claims and the above accompanying drawings are used to distinguish similar objects, rather than to describe a specific sequence or order. Data used in this way can be interchanged with each other under appropriate circumstances, such that the described embodiments of the present disclosure can be implemented in a sequence other than those illustrated in the figures or described in the present disclosure. In addition, terms "including", "having" and any variants thereof are intended to cover non-exclusive inclusions. For example, a process, method, system, product or device that includes a series of steps or units is not necessarily limited to those explicitly listed steps or units, but may include other steps or units that are not explicitly listed or are inherent to the process, method, product, or device.

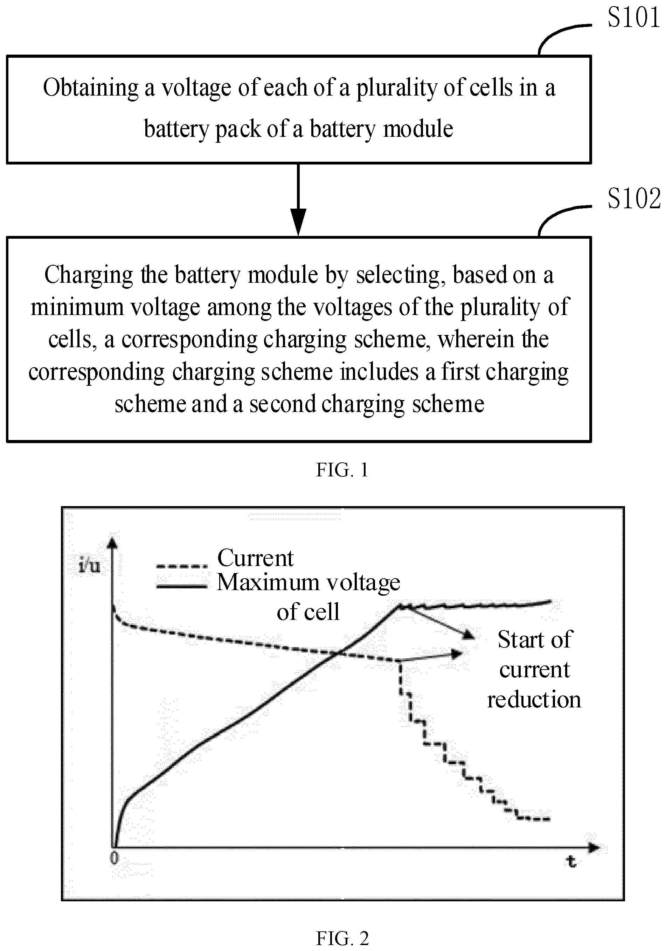

FIG. 1 is a flowchart of a charging method of an energy storage power supply according to an embodiment of the present disclosure. Referring to FIG. 1, the charging method of the energy storage power supply includes operations at blocks S101 and S102.

At block S101, a voltage of each of a plurality of cells in a battery pack of a battery module is obtained.

At block S102, the battery module is charged by selecting, based on a minimum voltage among the voltages of the plurality of cells, a corresponding charging scheme. The corresponding charging scheme includes a first charging scheme and a second charging scheme.

Before obtaining the voltage of each of the plurality of cells in the battery pack of the battery module, the battery module firstly stands for 3 hours in an environment of 25°C to ensure that the battery module is in a stable state before being charged.

After the standing, the battery module is connected to a battery management system (BMS) device. The voltage of each of the plurality of cells in the battery pack of the battery module is then obtained through the BMS, and the minimum voltage among the voltages of the plurality of cells in the battery pack is obtained by comparing the detected voltages of the plurality of cells in the battery pack. Further, the corresponding charging scheme is selected based on the minimum voltage, and therefore different charging schemes are selected based on different minimum voltages of the cells in the battery pack. In this way, charging efficiency, charging safety and the service life of the battery are improved.

According to an embodiment of the present disclosure, the selecting, based on the minimum voltage among the voltages of the plurality of cells, the corresponding charging scheme includes performing the first charging scheme when the minimum voltage among the voltages of the plurality of cells is greater than or equal to a first predetermined value.

The first predetermined value is 3.6 V. That is, when the minimum voltage among the voltages of the plurality of cells is greater than or equal to 3.6 V, the first charging scheme is performed. The first charging scheme may be a charging scheme for a ternary material in the related art.

According to an embodiment of the present disclosure, the selecting, based on the minimum voltage among the voltages of the plurality of cells, the corresponding charging scheme includes: discharging the battery module at a first constant power when the minimum voltage among the voltages of the plurality of cells is greater than or equal to a second predetermined value and smaller than a first predetermined value, and obtaining a first discharging period when the minimum voltage among the voltages of the plurality of cells is equal to a third predetermined value; performing the second charging scheme when the first discharging period is greater than or equal to a first predetermined duration; and performing the first charging scheme when the first discharging period is smaller than the first predetermined duration.

The first predetermined value is 3.6 V. The second predetermined value is 3.4 V. The third predetermined value is 3 V. The first predetermined duration is 30 min. The first constant power is P, where P is a nominal energy value of the battery module.

That is, when the minimum voltage among the voltages of the plurality of cells is greater than or equal to 3.4 V and smaller than 3.6 V, the battery module is discharged at the first constant power P, and the voltage of each cell is detected in real time. When the minimum voltage among the voltages of the plurality of cells reaches 3 V, the first discharging period is recorded. When the first discharging period is greater than or equal to 30 min, the second charging scheme is performed. When the first discharging period is smaller than 30 min, the first charging scheme is performed. The first charging scheme may be a charging scheme for a ternary material in the related art, and the second charging scheme may be a charging scheme for a lithium iron phosphate material in the related art.

When the battery module is selected to be discharged and the discharging period is long, it indicates that the battery module has a low material system and large electric quantity, and the second charging scheme is then selected. Conversely, when the discharging period is short, it indicates that the battery module has a high material system and small electric quantity, and the first charging scheme is then selected.

According to an embodiment of the present disclosure, the selecting, based on the minimum voltage among the voltages of the plurality of cells, the corresponding charging scheme includes: charging the battery module at a second constant power when the minimum voltage among the voltages of the plurality of cells is greater than or equal to a fourth predetermined value and smaller than a second predetermined value, and obtaining a charging period when the minimum voltage among the voltages of the plurality of cells is equal to a fifth predetermined value; performing the second charging scheme when the charging period is greater than or equal to a second predetermined duration; discharging the battery module at a first constant power when the charging period is smaller than the second predetermined duration, and obtaining a second discharging period when the minimum voltage among the voltages of the plurality of cells is equal to a third predetermined value; performing the second charging scheme when the second discharging period is greater than or equal to the second predetermined duration; and performing the first charging scheme when the second discharging period is smaller than the second predetermined duration.

The second predetermined value is 3.4 V. The third predetermined value is 3 V. The fourth predetermined value is 2.0 V. The fifth predetermined value is 3.45 V. The second predetermined duration is 10 min. The second constant power is 0.5P, where P is the nominal energy value of the battery module.

That is, when the minimum voltage among the voltages of the plurality of cells is greater than or equal to 2.0 V and smaller than 3.4 V, the battery module is charged at the second constant power of 0.5 P, and the minimum voltage among the voltages of the plurality of cells is detected in real time. When the minimum voltage among the voltages of the plurality of cells reaches 3.45 V, the charging period is obtained. When the charging period is greater than or equal to 10 min, the second charging scheme is performed. When the charging period is smaller than 10 min, the battery module is discharged at the first constant power P, and the minimum voltage among voltages of the plurality of cells is detected in real time. The second discharging period is obtained when the minimum voltage among the voltages of the plurality of cells reaches 3 V. The second charging scheme is performed when the second discharging period is greater than or equal to 10 min. The first charging scheme is performed when the second discharging period is smaller than 10 min. The first charging scheme may be a charging scheme for a ternary material in the related art, and the second charging scheme may be a charging scheme for a lithium iron phosphate material in the related art.

The charging period is determined by the charging schemes. When the charging period is long, it indicates that the battery module has a low material system and large electric quantity, and the second charging scheme is then selected. When the charging period is short, it is necessary to determine the discharging period again. When the discharging period is long, it indicates that the battery module has the low material system and the large electric quantity, and the second charging scheme is then selected. Conversely, when the discharging period is short, it indicates that the battery module has a high material system and small electric quantity, and the first charging scheme is then selected.

The first charging scheme and the second charging scheme are described in detail below.

According to an embodiment of the present disclosure, each of the first charging scheme and the second charging scheme includes: obtaining a battery cell temperature of the battery module; performing no charging when the battery cell temperature is lower than 0°C; charging the battery module at a third constant power when the battery cell temperature is higher than or equal to 0°C and lower than 10°C, reducing a charging current to 0.6 times a current current when a maximum voltage among the voltages of the plurality of cells in the battery module reaches a sixth predetermined value, cyclically performing, until the charging current reaches a seventh predetermined value, said charging the battery module at the third constant power and said reducing the charging current to 0.6 times the current current when the maximum voltage among the voltages of the plurality of cells in the battery module reaches the sixth predetermined value, and charging the battery module at the seventh predetermined value until the maximum voltage among the voltages of the plurality of cells in the battery module reaches a cut-off voltage; charging the battery module at a fourth constant power when the battery cell temperature is higher than or equal to 10°C and lower than 20°C, reducing the charging current to 0.6 times the current current when the maximum voltage among the voltages of the plurality of cells in the battery module reaches an eighth predetermined value, cyclically performing, until the charging current reaches the seventh predetermined value, said charging the battery module at the fourth constant power and said reducing the charging current to 0.6 times the current current when the maximum voltage among the voltages of the plurality of cells in the battery module reaches the eighth predetermined value, and charging the battery module at the seventh predetermined value until the maximum voltage among the voltages of the plurality of cells in the battery module reaches the cut-off voltage; charging the battery module at a first constant power when the battery cell temperature is higher than or equal to 20°C and lower than 35°C, reducing the charging current to 0.6 times the current current when the maximum voltage among the voltages of the plurality of cells in the battery module reaches a ninth predetermined value, cyclically performing, until the charging current reaches the seventh predetermined value, said charging the battery module at the first constant power and said reducing the charging current to 0.6 times the current current when the maximum voltage among the voltages of the plurality of cells in the battery module reaches the ninth predetermined value, and charging the battery module at the seventh predetermined value until the maximum voltage among the voltages of the plurality of cells in the battery module reaches the cut-off voltage; charging the battery module at a second constant power when the battery cell temperature is higher than or equal to 35°C and lower than 45°C, reducing the charging current to 0.6 times a current current when the maximum voltage among the voltages of the plurality of cells in the battery module reaches the ninth predetermined value, cyclically performing, until the charging current reaches the seventh predetermined value, said charging the battery module at the second constant power and said reducing the charging current to 0.6 times the current current when the maximum voltage among the voltages of the plurality of cells in the battery module reaches the ninth predetermined value, and charging the battery module at the seventh predetermined value until the maximum voltage among the voltages of the plurality of cells in the battery module reaches the cut-off voltage; charging the battery module at a fifth constant power when the battery cell temperature is higher than or equal to 45°C and lower than 50°C, reducing the charging current to 0.6 times the current current when the maximum voltage among the voltages of the plurality of cells in the battery module reaches the ninth predetermined value, cyclically performing, until the charging current reaches the seventh predetermined value, said charging the battery module at the fifth constant power and said reducing the charging current to 0.6 times the current current when the maximum voltage among the voltages of the plurality of cells in the battery module reaches the ninth predetermined value, and charging the battery module at the seventh predetermined value until the maximum voltage among the voltages of the plurality of cells in the battery module reaches the cut-off voltage; and performing no charging when the cell temperature is higher than or equal to 50°C.

The seventh predetermined value is 0.1 C. The first constant power is 1P. The second constant power is 0.5P. The third constant power is 0.15P. The fourth constant power is 0.3P. The fifth constant power is 0.2P, where P is the nominal energy value of the battery module. In the first charging scheme, the sixth predetermined value is 3.95 V, the eighth predetermined value is 4.00 V, the ninth predetermined value is 4.10 V, and the cut-off voltage is 4.15 V. In the second charging scheme, the sixth predetermined value is 3.40 V, the eighth predetermined value is 3.45 V, the ninth predetermined value is 3.5 V, and the cut-off voltage is 3.6 V

That is, assuming that the battery cell temperature of the battery module is T, the first charging scheme includes:
when T<0°C, performing no charging;
when 0≤T<10°C, charging the battery module at a constant power of 0.15 × 1P until a maximum voltage among the voltages of the plurality of cells in the battery module reaches 3.95 V, reducing a charging current to 0.6 times a current current (I=0.6I₀), cyclically performing, until the charging current reaches a minimum value of 0.1 C, the charging the battery module at the constant power of 0.15 × 1P until the maximum voltage among the voltages of the plurality of cells in the battery module reaches 3.95 V and the reducing the charging current to 0.6 times the current current (I=0.6I₀), and charging the battery module at the current of 0.1 C until the maximum voltage among the voltages of the plurality of cells in the battery module reaches a cut-off voltage of 4.15 V;
when 10≤T<20°C, charging the battery module at a constant power of 0.3×1P until a maximum voltage among the voltages of the plurality of cells in the battery module reaches 4.00 V, reducing a charging current to 0.6 times a current current (I=0.6I₀), cyclically performing, until the charging current reaches the minimum value of 0.1 C, the charging the battery module at the constant power of 0.3 × 1P until the maximum voltage among the voltages of the plurality of cells in the battery module reaches 4.00 V and the reducing the charging current to 0.6 times the current current (I=0.6I₀), and charging the battery module at the current of 0.1 C until the maximum voltage among the voltages of the plurality of cells in the battery module reaches the cut-off voltage of 4.15V;
when 20≤T<35°C, charging the battery module at a constant power of 1P until a maximum voltage among the voltages of the plurality of cells in the battery module reaches 4.10 V, reducing a charging current to 0.6 times a current current (I=0.6I₀), cyclically performing, until the charging current reaches the minimum value of 0.1 C, the charging the battery module at the constant power of 1P until the maximum voltage among the voltages of the plurality of cells in the battery module reaches 4.10 V and the reducing the charging current to 0.6 times the current current (I=0.6I₀), and charging the battery module at the current of 0.1 C until the maximum voltage among the voltages of the plurality of cells in the battery module reaches the cut-off voltage of 4.15 V;
when 35≤T<45°C, charging the battery module at a constant power of 0.3×1P until a maximum voltage among the voltages of the plurality of cells in the battery module reaches 4.10 V, reducing the charging current to 0.6 times a current current (I=0.6I₀), cyclically performing, until the charging current reaches the minimum value of 0.1 C, the charging the battery module at the constant power of 0.5×1P until the maximum voltage among the voltages of the plurality of cells in the battery module reaches 4.10 V and the reducing the charging current to 0.6 times the current current (I=0.6I₀), and charging the battery module at the current of 0.1 C until the maximum voltage among the voltages of the plurality of cells in the battery module reaches the cut-off voltage of 4.15 V;
when 45≤T<50°C, charging the battery module at a constant power of 0.2×1P until a maximum voltage among the voltages of the plurality of cells in the battery module reaches 4.10 V, reducing a charging current to 0.6 times a current current (I=0.6I₀), cyclically performing, until the charging current reaches the minimum value of 0.1 C, the charging the battery module at the constant power of 0.2×1P until the maximum voltage among the voltages of the plurality of cells in the battery module reaches 4.10 V and the reducing the charging current to 0.6 times the current current (I=0.6I₀), and charging the battery module at the current of 0.1 C until the maximum voltage among the voltages of the plurality of cells in the battery module reaches the cut-off voltage of 4.15 V; and
when T≥50°C, performing no charging.

The second charging scheme includes:
when T<0°C, performing no charging;
when 0≤T<10°C, charging the battery module at a constant power of 0.15×1P until a maximum voltage among the voltages of the plurality of cells in the battery module reaches 3.40 V, reducing a charging current to 0.6 times a current current (I=0.6I₀), cyclically performing, until the charging current reaches a minimum value of 0.1 C, the charging the battery module at the constant power of 0.15×1P until the maximum voltage among the voltages of the plurality of cells in the battery module reaches 3.40 V and the reducing the charging current to 0.6 times the current current (I=0.6I₀), and charging the battery module at the current of 0.1 C until the maximum voltage among the voltages of the plurality of cells in the battery module reaches a cut-off voltage of 3.6 V;
when 10≤T<20°C, charging the battery module at a constant power of 0.3×1P until a maximum voltage among the voltages of the plurality of cells in the battery module reaches 3.45 V, reducing a charging current to 0.6 times a current current (I=0.6I₀), cyclically performing, until the charging current reaches the minimum value of 0.1 C, the charging the battery module at the constant power of 0.3×1P until the maximum voltage among the voltages of the plurality of cells in the battery module reaches 3.45 V and the reducing the charging current to 0.6 times the current current (I=0.6I₀), and charging the battery module at the current of 0.1 C until the maximum voltage among the voltages of the plurality of cells in the battery module reaches the cut-off voltage of 3.6 V;
when 20≤T<35°C, charging the battery module at a constant power of P until a maximum voltage among the voltages of the plurality of cells in the battery module reaches 3.5 V, reducing a charging current to 0.6 times a current current (I=0.6I₀), cyclically performing, until the charging current reaches the minimum value of 0.1 C, the charging the battery module at the constant power of 1P until the maximum voltage among the voltages of the plurality of cells in the battery module reaches 3.5 V and the reducing the charging current to 0.6 times the current current (I=0.6I₀), and charging the battery module at the current of 0.1 C until the maximum voltage among the voltages of the plurality of cells in the battery module reaches the cut-off voltage of 3.6 V;
when 35≤T<45°C, charging the battery module at the constant power of 0.5×1P until a maximum voltage among the voltages of the plurality of cells in the battery module reaches 3.5 V, reducing the charging current to 0.6 times a current current (I=0.6I₀), cyclically performing, until the charging current reaches the minimum value of 0.1 C, the charging the battery module at the constant power of 0.5×1P until the maximum voltage among the voltages of the plurality of cells in the battery module reaches 3.5 V and the reducing the charging current to 0.6 times the current current (I=0.6I₀), and charging the battery module at the current of 0.1 C until the maximum voltage among the voltages of the plurality of cells in the battery module reaches the cut-off voltage of 3.6 V;
when 45≤T<50°C, charging the battery module at a constant power of 0.2×1P until a maximum voltage among the voltages of the plurality of cells in the battery module reaches 3.5 V, reducing a charging current to 0.6 times a current current (I=0.6I₀), cyclically performing, until the charging current reaches the minimum value of 0.1 C, the charging the battery module at the constant power of 0.2× 1P until the maximum voltage among the voltages of the plurality of cells in the battery module reaches 3.5 V and the reducing the charging current to 0.6 times the current current (I=0.6I₀), and charging the battery module at the current of 0.1 C until the maximum voltage among the voltages of the plurality of cells in the battery module reaches the cut-off voltage of 3.6 V; and
when T≥50°C, performing no charging.

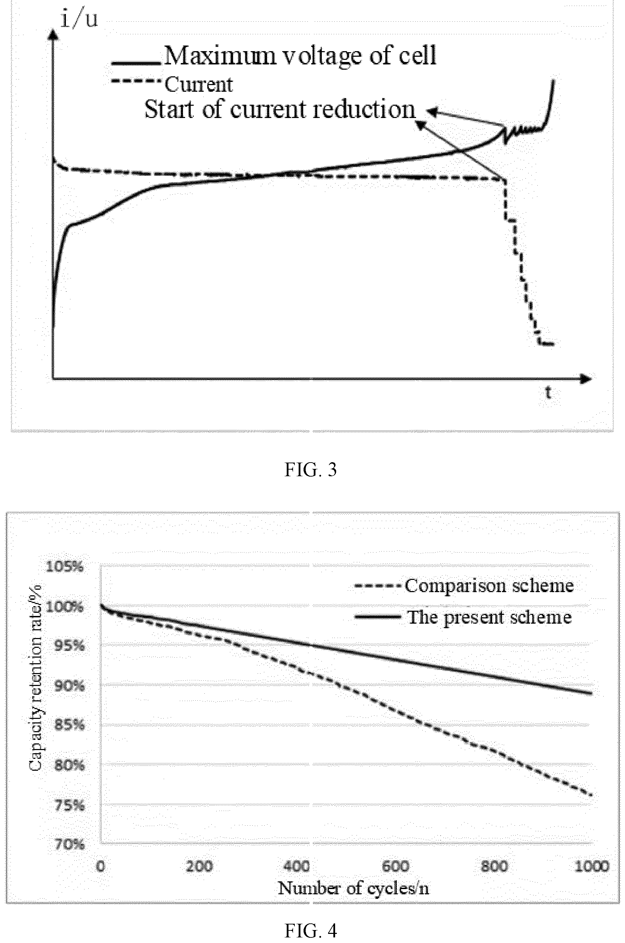

As illustrated in FIG. 2 and FIG. 3, the battery module is charged at the different constant powers under the different temperatures until the maximum voltage among the voltages of the plurality of cells in the battery module reaches a certain voltage value. The charging current is then started to be reduced, and the charging the battery module until the maximum voltage among the voltages of the plurality of cells in the battery module reaches the certain voltage value and the reducing the charging current are repeatedly performed until the charging current reaches a certain current value. The charging is then performed at the certain current until the maximum voltage among the voltages of the plurality of cells reaches the cut-off voltage, and the charging is stopped. The charging mode of constant current reduction can improve performance of the battery module. Therefore, a risk of lithium precipitation is reduced, and the service life of the battery is prolonged.

In addition, when the battery cell temperature of the battery module is low than 0°C and higher than 50°C, the charging is not performed to protect the battery module.

In the above embodiment, the constant power of 1P is defined as a power of the battery module that is discharged to the cut-off voltage within 1 h, and is numerically equal to the nominal energy value of the battery module. Each of the plurality of predetermined values in the present disclosure is an example.

As illustrated in FIG. 4, a dashed line is a performance curve of a battery charged in a normal charging mode, and a solid line is a performance curve of a battery charged by the charging method according to the embodiments of the present disclosure. As illustrated in FIG. 4, under the same number of cycles, a capacity retention rate of the battery that is charged by the charging method according to the embodiments of the present disclosure is much higher than the performance of the battery charged in the normal charging mode. That is, in a high state of charge (SOC), the charging method according to the embodiments of the present disclosure reduces the charging current, improves transmission capacity of lithium ions, and reduces polarization internal resistance and the risk of lithium precipitation. As illustrated in FIG. 4, compared with the method of directly charging the battery to the cut-off voltage, the charging method according to the embodiments of the present disclosure improves the cycle performance, prolongs a service life of a product, and effectively improves the safety.

Therefore, the charging method according to the embodiments of the present disclosure can be adaptive to an intelligent detection scheme, intelligently determine a material system, and perform the charging method. In addition, multi-temperature section monitor and multi-voltage section monitor are used, which facilitates to improve the safety of the battery. In this way, charging efficiency of the battery is improved. Therefore, the battery has a short charging period. Thus, the user experience is improved. On a premise of maximum use of lithium battery characteristics without lithium precipitation and other safety issues, a cycle life is improved. The charging method according to the embodiments of the present disclosure improves the charging efficiency, and has the short charging period and the low heating power consumption. Therefore, the safety and the service life of the battery are improved.

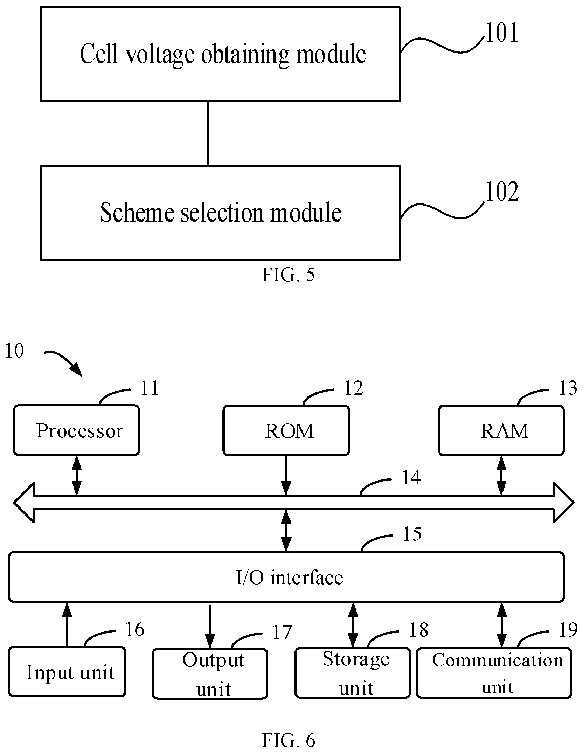

FIG. 5 is a schematic block diagram of a charging apparatus for an energy storage power supply according to an embodiment of the present disclosure. As illustrated in FIG. 5, the charging apparatus for the energy storage power supply includes a cell voltage obtaining module 101 and a scheme selection module 102. The cell voltage obtaining module 101 is configured to obtain a voltage of each of a plurality of cells in a battery pack of a battery module. The scheme selection module 102 is configured to charge the battery module by selecting, based on a minimum voltage among the voltages of the plurality of cells, a corresponding charging scheme. The corresponding charging scheme includes a first charging scheme and a second charging scheme.

According to an embodiment of the present disclosure, the scheme selection module 102 includes a first execution module, which is configured to perform the first charging scheme when the minimum voltage among the voltages of the plurality of cells is greater than or equal to the first predetermined value.

According to an embodiment of the present disclosure, the scheme selection module 102 includes a second execution module. The second execution module is configured to discharge the battery module at the first constant power when the minimum voltage among the voltages of the plurality of cells is greater than or equal to the second predetermined value and smaller than the first predetermined value, and obtain the first discharging period when the minimum voltage among the voltages of the plurality of cells is equal to the third predetermined value; to perform the second charging scheme when the first discharging period is greater than or equal to the first predetermined duration; and to perform the first charging scheme when the first discharging period is smaller than the first predetermined duration.

According to an embodiment of the present disclosure, the scheme selection module 102 includes a third execution module. The third execution module is configured to charge the battery module at the second constant power when the minimum voltage among the voltages of the plurality of cells is greater than or equal to the fourth predetermined value and smaller than the second predetermined value, and obtain a charging period when the minimum voltage among the voltages of the plurality of cells is equal to the fifth predetermined value; to perform the second charging scheme when the charging period is greater than or equal to the second predetermined duration; to discharge the battery module at the first constant power when the charging period is smaller than the second predetermined duration, and obtain the second discharging period when the minimum voltage among the voltages of the plurality of cells is equal to the third predetermined value; to perform the second charging scheme when the second discharging period is greater than or equal to the second predetermined duration; and to perform the first charging scheme when the second discharging period is smaller than the second predetermined duration.

According to an embodiment of the present disclosure, the scheme selection module 102 includes a scheme execution module. The scheme execution module is configured to: obtain a battery cell temperature of the battery module; perform no charging when the battery cell temperature is lower than 0°C; charge the battery module at a third constant power when the battery cell temperature is higher than or equal to 0°C and lower than 10°C, reduce a charging current to 0.6 times a current current when a maximum voltage among the voltages of the plurality of cells in the battery module reaches a sixth predetermined value, cyclically perform, until the charging current reaches a seventh predetermined value, the charging the battery module at the third constant power and the reducing the charging current to 0.6 times the current current when the maximum voltage among the voltages of the plurality of cells in the battery module reaches the sixth predetermined value, and charge the battery module at the seventh predetermined value until the maximum voltage among the voltages of the plurality of cells in the battery module reaches a cut-off voltage; charge the battery module at a fourth constant power when the battery cell temperature is higher than or equal to 10°C and lower than 20°C, reduce the charging current to 0.6 times the current current when the maximum voltage among the voltages of the plurality of cells in the battery module reaches an eighth predetermined value, cyclically perform, until the charging current reaches the seventh predetermined value, the charging the battery module at the fourth constant power and the reducing the charging current to 0.6 times the current current when the maximum voltage among the voltages of the plurality of cells in the battery module reaches the eighth predetermined value, and charge the battery module at the seventh predetermined value until the maximum voltage among the voltages of the plurality of cells in the battery module reaches the cut-off voltage; charge the battery module at a first constant power when the battery cell temperature is higher than or equal to 20°C and lower than 35°C, reduce the charging current to 0.6 times the current current when the maximum voltage among the voltages of the plurality of cells in the battery module reaches a ninth predetermined value, cyclically perform, until the charging current reaches the seventh predetermined value, the charging the battery module at the first constant power and the reducing the charging current to 0.6 times the current current when the maximum voltage among the voltages of the plurality of cells in the battery module reaches the ninth predetermined value, and charge the battery module at the seventh predetermined value until the maximum voltage among the voltages of the plurality of cells in the battery module reaches the cut-off voltage; charge the battery module at a second constant power when the battery cell temperature is higher than or equal to 35°C and lower than 45°C, reduce the charging current to 0.6 times a current current when the maximum voltage among the voltages of the plurality of cells in the battery module reaches the ninth predetermined value, cyclically perform, until the charging current reaches the seventh predetermined value, the charging the battery module at the second constant power and the reducing the charging current to 0.6 times the current current when the maximum voltage among the voltages of the plurality of cells in the battery module reaches the ninth predetermined value, and charge the battery module at the seventh predetermined value until the maximum voltage among the voltages of the plurality of cells in the battery module reaches the cut-off voltage; charge the battery module at a fifth constant power when the battery cell temperature is higher than or equal to 45°C and lower than 50°C, reduce the charging current to 0.6 times the current current when the maximum voltage among the voltages of the plurality of cells in the battery module reaches the ninth predetermined value, cyclically perform, until the charging current reaches the seventh predetermined value, the charging the battery module at the fifth constant power and the reducing the charging current to 0.6 times the current current when the maximum voltage among the voltages of the plurality of cells in the battery module reaches the ninth predetermined value, and charging the battery module at the seventh predetermined value until the maximum voltage among the voltages of the plurality of cells in the battery module reaches the cut-off voltage; and perform no charging when the cell temperature is higher than or equal to 50°C.

According to an embodiment of the present disclosure, the seventh predetermined value is 0.1 C, the first constant power is 1P, the second constant power is 0.5P, the third constant power is 0.15P, the fourth constant power is 0.3P, and the fifth constant power is 0.2P, where P represents the nominal energy value of the battery module. In the first charging scheme, the sixth predetermined value is 3.95 V, the eighth predetermined value is 4.00 V, the ninth predetermined value is 4.10 V, and the cut-off voltage is 4.15 V. In the second charging scheme, the sixth predetermined value is 3.40 V, the eighth predetermined value is 3.45 V, the ninth predetermined value is 3.5 V, and the cut-off voltage is 3.6 V.

According to an embodiment of the present disclosure, the first predetermined value is 3.6 V.

According to an embodiment of the present disclosure, the first predetermined value is 3.6 V, the second predetermined value is 3.4 V, the third predetermined value is 3 V, the first predetermined duration is 30 min, and the first constant power is P, where P is the nominal energy value of the battery module.

According to an embodiment of the present disclosure, the second predetermined value is 3.4 V, the third predetermined value is 3 V, the fourth predetermined value is 2.0 V, the fifth predetermined value is 3.45 V, the second predetermined duration is 10 min, and the second constant power is 0.5P, where P is the nominal energy value of the battery module.

The above apparatus can perform the charging method of the energy storage power supply according to any one of the embodiments of the present disclosure, and the content described in the above embodiments is not repeated herein.

FIG. 6 is a schematic structural diagram of an electronic device according to an embodiment of the present disclosure. As illustrated in FIG. 6, the electronic device 10 includes at least one processor and a memory in communication connection with the at least one processor. The memory has a computer program stored thereon, and the computer program is executable by the at least one processor. The computer program, when executed by the at least one processor, causes the at least one processor to perform the charging method of the energy storage power supply according to any one of the embodiments of the present disclosure.

The embodiments of the present disclosure further provide a computer-readable storage medium. The computer-readable storage medium has computer instructions stored thereon. The computer instructions, when executed by a processor, implement the charging method of the energy storage power supply according to any one of the embodiments of the present disclosure. The storage medium may be a non-transitory storage medium.

FIG. 6 illustrates the schematic structural diagram of the electronic device 10 that may be used to implement the embodiments of the present disclosure. The electronic device is intended to represent various forms of digital computers, such as a laptop computer, a desktop computer, a workbench, a personal digital assistant, a server, a blade server, a mainframe computer and other suitable computers. Components illustrated herein, their connections and relationships as well as their functions are merely examples, and are not intended to limit the implementation of the present disclosure described and/or required herein.

As illustrated in FIG. 6, the electronic device 10 includes the at least one processor 11 and the memory in communication connection with the at least one processor 11, such as a Read-only Memory (ROM) 12 and a Random Access Memory (RAM) 13. The memory has a computer program stored thereon, and the computer program is executable by the at least one processor. The at least one processor 11 may perform various suitable actions and processes in accordance with computer program instructions stored on the ROM 12 or loaded from a storage unit 18 into the RAM 13. Various programs and data necessary for operation of the electronic device 10 may also be stored on the RAM 13. The processor 11, the ROM 12 and the RAM 13 are connected to one another through a bus 14. An input/output (I/O) interface 15 is also connected to the bus 14.

Components in the electronic device 10 are connected to the I/O interface 15. The components in the electronic device 10 includes: an input unit 16, such as a keyboard and a mouse; an output unit 17, such as various types of displays and speakers; the storage unit 18, such as a magnetic disk and an optical disk; and a communication unit 19, such as a network card, a modem, and a wireless communication transceiver. The communication unit 19 allows the electronic device 10 to exchange information/data with other devices via a computer network (such as, the Internet) and/or various telecommunication networks.

The processor 11 may be a variety of general purpose and/or special purpose processing components with processing and computing capabilities. Some examples of the processor 11 include, but are not limited to, a Central Processing Unit (CPU), a Graphic Processing Unit (GPU), various specialized Artificial Intelligence (AI) computing chips, various processors running machine learning model algorithms, a Digital Signal Processor (DSP), and any suitable processor, controller, microcontroller, etc. The processor 11 performs a plurality of methods and processes described above, such as the charging method of the energy storage power supply.

In some embodiments, the charging method of the energy storage power supply may be implemented as a computer program tangibly embodied in the computer-readable storage medium, such as the storage unit 18. In some embodiments, some or all of the computer programs may be loaded and/or installed onto the electronic device 10 via the ROM 12 and/or the communication unit 19. When the computer program is loaded onto the RAM 13 and executed by the processor 11, one or more steps of the charging method of the energy storage power supply described above may be performed. Alternatively, in other embodiments, the processor 11 may be configured to perform the charging method of the energy storage power supply in any other suitable manner, e.g., by means of firmware.

Various implementations of the systems and technologies described above in the present disclosure can be implemented in digital electronic circuit systems, integrated circuit systems, Field Programmable Gate Arrays (FPGAs), Application Specific Integrated Circuits (ASICs), Application Specific Standard Parts (ASSPs), Systems on Chip (SOCs), Complex Programmable Logic Devices (CPLDs), computer hardware, firmware, software, and/or combinations thereof. These various implementations may include: being implemented in one or more computer programs that are executable and/or interpreted on a programmable system including at least one programmable processor. The programmable processor may be a dedicated or general-purpose programmable processor that may receive data and instructions from a storage system, at least one input device, and at least one output device, and transmit the data and instructions to the storage system, the at least one input device, and the at least one output device.

Computer programs for performing the method in the present disclosure may be written in any combination of one or more programming languages. These computer programs may be provided to a processor in a general-purpose computer, a special purpose computer, or other programmable data processing devices, such that the computer programs are configured to, when executed by the processor, implement functions/operations specified in the flow chart and/or block diagrams. The computer programs may be executed entirely on a machine, partly on the machine, or the computer programs may be, as a separate software package, executed partly on the machine, partly on a remote computer, or entirely on the remote computer or server.

In the context of the present disclosure, the computer-readable medium may be a tangible medium that may contain, or store a computer program for use by or in combination with an instruction execution system, an apparatus, or a device. The computer-readable medium may include, but is not limited to, an electronic, magnetic, optical, electromagnetic, infrared, or semiconductor system, apparatus, or device, or any suitable combination of the foregoing. Alternatively, the computer-readable storage medium may be a machine-readable signal medium. Examples of the machine-readable storage medium may include electrical connection having one or more wires, a portable computer disk, a hard disk, an RAM, an ROM, an Erasable Programmable Read Only Memory (EPROM or a flash memory), an optical fiber, a compact disc read-only memory (CD-ROM), an optical memory component, a magnetic memory component, or any suitable combination thereof.

In order to provide interactions with the user, the systems and technologies described herein may be implemented on the electronic device. The electronic device has a display device (for example, a cathode ray tube (CRT) or a liquid crystal display (LCD) monitor) for displaying information to the user; and a keyboard and a pointing device (for example, a mouse or trackball) through which the user may provide input to the computer. Other kinds of devices may also be used to provide interactions with the user. For example, the feedback provided to the user may be any form of sensory feedback (e.g., visual feedback, auditory feedback, or haptic feedback), and input from the user may be received in any form (including acoustic input, voice input, or tactile input).

The systems and technologies described herein may be implemented in a computing system that includes back-end components (for example, as a data server), a computing system that includes middleware components (for example, an application server), a computing system that includes front-end components (for example, a user computer with a graphical user interface or a web browser, through which the user may interact with the implementation of the systems and technologies described herein), or a computing system including any combination of the back-end components, the middleware components, or the front-end components. The components of the system may be interconnected by digital data communication (e.g., a communication network) in any form or medium. Examples of the communication network include a local area network (LAN), a wide area network (WAN), a block-chain-based network, and the Internet.

A computer system may include a client and a server. The client and server are generally remote from each other and typically interact through the communication network. A client-server relationship is generated by computer programs running on respective computers and having a client-server relationship with each other. The server may be a cloud server, also known as a cloud computing server or a cloud host, and is a host product in a cloud computing service system, to solve defects of high management difficulty and weak service scalability in traditional physical host and virtual private server (VPS) services.

In summary, based on the charging method of the energy storage power supply, the apparatus therefor, the device, and the medium according to the embodiments of the present disclosure, the charging method includes obtaining a voltage of each of a plurality of cells in a battery pack of a battery module, and charging the battery module by selecting, based on a minimum voltage among the voltages of the plurality of cells, a corresponding charging scheme. The corresponding charging scheme includes the first charging scheme and the second charging scheme. In this way, the charging efficiency is improved, the charging period is shortened, and the heating power consumption is reduced. Therefore, the safety and service life of the battery is improved.

Various forms of processes illustrated above may be reordered, added, or deleted. For example, the blocks described in the present disclosure may be executed in parallel, sequentially, or in different orders, as long as the desired results of the technical solution disclosed in the present disclosure can be achieved, there is no limitation herein.

## Claims

1. A charging method of an energy storage power supply, the charging method comprising:
obtaining (S101) a voltage of each of a plurality of cells in a battery pack of a battery module; and
charging (S102) the battery module by selecting, based on a minimum voltage among the voltages of the plurality of cells, a corresponding charging scheme,
wherein the corresponding charging scheme comprises a first charging scheme and a second charging scheme;
**characterised in that**
said selecting, based on the minimum voltage among the voltages of the plurality of cells, the corresponding charging scheme comprises:
discharging the battery module at a first constant power when the minimum voltage among the voltages of the plurality of cells is greater than or equal to a second predetermined value and smaller than a first predetermined value, and obtaining a first discharging period when the minimum voltage among the voltages of the plurality of cells is equal to a third predetermined value;
performing the second charging scheme when the first discharging period is greater than or equal to a first predetermined duration; and
performing the first charging scheme when the first discharging period is smaller than the first predetermined duration.

2. The charging method according to claim 1, wherein said selecting, based on the minimum voltage among the voltages of the plurality of cells, the corresponding charging scheme comprises:
performing the first charging scheme when the minimum voltage among the voltages of the plurality of cells is greater than or equal to the first predetermined value.

3. The charging method according to claim 1, wherein said selecting, based on the minimum voltage among the voltages of the plurality of cells, the corresponding charging scheme comprises:
charging the battery module at a second constant power when the minimum voltage among the voltages of the plurality of cells is greater than or equal to a fourth predetermined value and smaller than a second predetermined value, and obtaining a charging period when the minimum voltage among the voltages of the plurality of cells is equal to a fifth predetermined value;
performing the second charging scheme when the charging period is greater than or equal to a second predetermined duration;
discharging the battery module at a first constant power when the charging period is smaller than the second predetermined duration, and obtaining a second discharging period when the minimum voltage among the voltages of the plurality of cells is equal to a third predetermined value;
performing the second charging scheme when the second discharging period is greater than or equal to the second predetermined duration; and
performing the first charging scheme when the second discharging period is smaller than the second predetermined duration.

4. The charging method according to claim 1, wherein each of the first charging scheme and the second charging scheme comprises:
obtaining a battery cell temperature of the battery module;
performing no charging when the battery cell temperature is lower than 0°C;
charging the battery module at a third constant power when the battery cell temperature is higher than or equal to 0°C and lower than 10°C, reducing a charging current to 0.6 times a current current when a maximum voltage among the voltages of the plurality of cells in the battery module reaches a sixth predetermined value, cyclically performing, until the charging current reaches a seventh predetermined value, said charging the battery module at the third constant power and said reducing the charging current to 0.6 times the current current when the maximum voltage among the voltages of the plurality of cells in the battery module reaches the sixth predetermined value, and charging the battery module at the seventh predetermined value until the maximum voltage among the voltages of the plurality of cells in the battery module reaches a cut-off voltage;
charging the battery module at a fourth constant power when the battery cell temperature is higher than or equal to 10°C and lower than 20°C, reducing the charging current to 0.6 times the current current when the maximum voltage among the voltages of the plurality of cells in the battery module reaches an eighth predetermined value, cyclically performing, until the charging current reaches the seventh predetermined value, said charging the battery module at the fourth constant power and said reducing the charging current to 0.6 times the current current when the maximum voltage among the voltages of the plurality of cells in the battery module reaches the eighth predetermined value, and charging the battery module at the seventh predetermined value until the maximum voltage among the voltages of the plurality of cells in the battery module reaches the cut-off voltage;
charging the battery module at a first constant power when the battery cell temperature is higher than or equal to 20°C and lower than 35°C, reducing the charging current to 0.6 times the current current when the maximum voltage among the voltages of the plurality of cells in the battery module reaches a ninth predetermined value, cyclically performing, until the charging current reaches the seventh predetermined value, said charging the battery module at the first constant power and said reducing the charging current to 0.6 times the current current when the maximum voltage among the voltages of the plurality of cells in the battery module reaches the ninth predetermined value, and charging the battery module at the seventh predetermined value until the maximum voltage among the voltages of the plurality of cells in the battery module reaches the cut-off voltage;
charging the battery module at a second constant power when the battery cell temperature is higher than or equal to 35°C and lower than 45°C, reducing the charging current to 0.6 times a current current when the maximum voltage among the voltages of the plurality of cells in the battery module reaches the ninth predetermined value, cyclically performing, until the charging current reaches the seventh predetermined value, said charging the battery module at the second constant power and said reducing the charging current to 0.6 times the current current when the maximum voltage among the voltages of the plurality of cells in the battery module reaches the ninth predetermined value, and charging the battery module at the seventh predetermined value until the maximum voltage among the voltages of the plurality of cells in the battery module reaches the cut-off voltage;
charging the battery module at a fifth constant power when the battery cell temperature is higher than or equal to 45°C and lower than 50°C, reducing the charging current to 0.6 times the current current when the maximum voltage among the voltages of the plurality of cells in the battery module reaches the ninth predetermined value, cyclically performing, until the charging current reaches the seventh predetermined value, said charging the battery module at the fifth constant power and said reducing the charging current to 0.6 times the current current when the maximum voltage among the voltages of the plurality of cells in the battery module reaches the ninth predetermined value, and charging the battery module at the seventh predetermined value until the maximum voltage among the voltages of the plurality of cells in the battery module reaches the cut-off voltage; and
performing no charging when the cell temperature is higher than or equal to 50°C.

5. The charging method according to claim 4, wherein:
the seventh predetermined value is 0.1 C, the first constant power is 1P, the second constant power is 0.5P, the third constant power is 0.15P, the fourth constant power is 0.3P, and the fifth constant power is 0.2P, where P represents a nominal energy value of the battery module;
in the first charging scheme, the sixth predetermined value is 3.95 V, the eighth predetermined value is 4.00 V, the ninth predetermined value is 4.10 V, and the cut-off voltage is 4.15 V; and
in the second charging scheme, the sixth predetermined value is 3.40 V, the eighth predetermined value is 3.45 V, the ninth predetermined value is 3.5 V, and the cut-off voltage is 3.6 V

6. The charging method according to claim 1, wherein the first predetermined value is 3.6 V.

7. The charging method according to claim 1, wherein the first predetermined value is 3.6 V;
the second predetermined value is 3.4 V;
the third predetermined value is 3 V;
the first predetermined duration is 30 min; and
the first constant power is P, where P represents a nominal energy value of the battery module.

8. The charging method according to claim 3, wherein the second predetermined value is 3.4 V;
the third predetermined value is 3 V;
the fourth predetermined value is 2.0 V;
the fifth predetermined value is 3.45 V;
the second predetermined duration is 10 min; and
the second constant power is 0.5P, where P represents a nominal energy value of the battery module.

9. A charging apparatus for an energy storage power supply, comprising:
a cell voltage obtaining module (101) configured to obtain a voltage of each of a plurality of cells in a battery pack of a battery module; and
a scheme selection module (102) configured to charge the battery module by selecting, based on a minimum voltage among the voltages of the plurality of cells, a corresponding charging scheme,
wherein the corresponding charging scheme comprises a first charging scheme and a second charging scheme;
**characterised in that**
said selecting, based on the minimum voltage among the voltages of the plurality of cells, the corresponding charging scheme comprises:
discharging the battery module at a first constant power when the minimum voltage among the voltages of the plurality of cells is greater than or equal to a second predetermined value and smaller than a first predetermined value, and obtaining a first discharging period when the minimum voltage among the voltages of the plurality of cells is equal to a third predetermined value;
performing the second charging scheme when the first discharging period is greater than or equal to a first predetermined duration; and
performing the first charging scheme when the first discharging period is smaller than the first predetermined duration.

10. An electronic device, comprising:
at least one processor (11); and
a memory (12, 13) in communication connection with the at least one processor,
wherein the memory (12, 13) has a computer program stored thereon, the computer program being executable by the at least one processor (11); and
wherein the computer program, when executed by the at least one processor (11), causes the at least one processor (11) to perform the charging method according to any one of claims 1 to 8.

11. A computer-readable storage medium, having computer instructions stored thereon, wherein the computer instructions, when executed by a processor (11), implement the charging method according to any one of claims 1 to 8.

## Patentansprüche

1. Ladeverfahren für eine Energiespeicher-Stromversorgung, wobei das Ladeverfahren Folgendes umfasst:
Ermitteln (S101) der Spannung jeder einer Vielzahl von Zellen in einem Batteriepack eines Batteriemoduls; und
Laden (S102) des Batteriemoduls durch Auswählen eines entsprechenden Ladeschemas auf der Grundlage einer niedrigsten Spannung unter den Spannungen der Vielzahl von Zellen,
wobei das entsprechende Ladeschema ein erstes Ladeschema und ein zweites Ladeschema umfasst;
**dadurch gekennzeichnet, dass**
das Auswählen des entsprechenden Ladeschemas auf der Grundlage der niedrigsten Spannung unter den Spannungen der Vielzahl von Zellen Folgendes umfasst:
Entladen des Batteriemoduls mit einer ersten konstanten Leistung, wenn die niedrigste Spannung unter den Spannungen der Vielzahl von Zellen größer oder gleich einem zweiten vorgegebenen Wert und kleiner als ein erster vorgegebener Wert ist, und Ermitteln einer ersten Entladezeit, wenn die niedrigste Spannung unter den Spannungen der Vielzahl von Zellen gleich einem dritten vorgegebenen Wert ist;
Ausführen des zweiten Ladeschemas, wenn die erste Entladezeit größer oder gleich einer ersten vorgegebenen Dauer ist; und
Ausführen des ersten Ladeschemas, wenn die erste Entladezeit kleiner als die erste vorgegebene Dauer ist.

2. Ladeverfahren nach Anspruch 1, wobei das Auswählen des entsprechenden Ladeschemas auf der Grundlage der niedrigsten Spannung unter den Spannungen der Vielzahl von Zellen Folgendes umfasst:
Ausführen des ersten Ladeschemas, wenn die niedrigste Spannung unter den Spannungen der Vielzahl von Zellen größer oder gleich dem ersten vorgegebenen Wert ist.

3. Ladeverfahren nach Anspruch 1, wobei das Auswählen des entsprechenden Ladeschemas auf der Grundlage der niedrigsten Spannung unter den Spannungen der Vielzahl von Zellen Folgendes umfasst:
Laden des Batteriemoduls mit einer zweiten konstanten Leistung, wenn die niedrigste Spannung unter den Spannungen der Vielzahl von Zellen größer oder gleich einem vierten vorgegebenen Wert und kleiner als ein zweiter vorgegebener Wert ist, und Ermitteln einer Ladezeit, wenn die niedrigste Spannung unter den Spannungen der Vielzahl von Zellen gleich einem fünften vorgegebenen Wert ist;
Ausführen des zweiten Ladeschemas, wenn die Ladezeit größer oder gleich einer zweiten vorgegebenen Dauer ist;
Entladen des Batteriemoduls mit einer ersten konstanten Leistung, wenn die Ladezeit kleiner als die zweite vorgegebene Dauer ist, und Ermitteln einer zweiten Entladezeit, wenn die niedrigste Spannung unter den Spannungen der Vielzahl von Zellen gleich einem dritten vorgegebenen Wert ist;
Ausführen des zweiten Ladeschemas, wenn die zweite Entladezeit größer oder gleich einer zweiten vorgegebenen Dauer ist; und
Ausführen des ersten Ladeschemas, wenn die zweite Entladezeit kleiner als die zweite vorgegebene Dauer ist.

4. Ladeverfahren nach Anspruch 1, wobei jedes von dem ersten Ladeschema und dem zweiten Ladeschema Folgendes umfasst:
Ermitteln einer Batteriezellentemperatur des Batteriemoduls;
Unterlassen des Ladens, wenn die Batteriezellentemperatur unter 0 °C liegt;
Laden des Batteriemoduls mit einer dritten konstanten Leistung, wenn die Batteriezellentemperatur größer oder gleich 0 °C und kleiner als 10 °C ist, Reduzieren eines Ladestroms auf das 0,6-fache eines aktuellen Stroms, wenn eine maximale Spannung unter den Spannungen der Vielzahl von Zellen im Batteriemodul den sechsten vorgegebenen Wert erreicht, zyklisches Durchführen, bis der Ladestrom einen siebten vorgegebenen Wert erreicht, des Ladens des Batteriemoduls mit der dritten konstanten Leistung und des Reduzierens des Ladestroms auf das 0,6-fache des aktuellen Stroms, wenn die maximale Spannung unter den Spannungen der Vielzahl von Zellen im Batteriemodul den sechsten vorgegebenen Wert erreicht, und Laden des Batteriemoduls mit dem siebten vorgegebenen Wert, bis die maximale Spannung unter den Spannungen der Vielzahl von Zellen im Batteriemodul eine Abschaltspannung erreicht;
Laden des Batteriemoduls mit einer vierten konstanten Leistung, wenn die Batteriezellentemperatur größer oder gleich 10 °C und kleiner als 20 °C ist, Reduzieren des Ladestroms auf das 0,6-fache des aktuellen Stroms, wenn die maximale Spannung unter den Spannungen der Vielzahl von Zellen im Batteriemodul einen achten vorgegebenen Wert erreicht, zyklisches Durchführen, bis der Ladestrom den siebten vorgegebenen Wert erreicht, des Ladens des Batteriemoduls mit der vierten konstanten Leistung und des Reduzierens des Ladestroms auf das 0,6-fache des aktuellen Stroms, wenn die maximale Spannung unter den Spannungen der Vielzahl von Zellen im Batteriemodul den achten vorgegebenen Wert erreicht, und Laden des Batteriemoduls mit dem siebten vorgegebenen Wert, bis die maximale Spannung unter den Spannungen der Vielzahl von Zellen im Batteriemodul die Abschaltspannung erreicht;
Laden des Batteriemoduls mit einer ersten konstanten Leistung, wenn die Batteriezellentemperatur größer oder gleich 20 °C und kleiner als 35 °C ist, Reduzieren des Ladestroms auf das 0,6-fache des aktuellen Stroms, wenn die maximale Spannung unter den Spannungen der Vielzahl von Zellen im Batteriemodul einen neunten vorgegebenen Wert erreicht, zyklisches Durchführen, bis der Ladestrom den siebten vorgegebenen Wert erreicht, des Ladens des Batteriemoduls mit der ersten konstanten Leistung und des Reduzierens des Ladestroms auf das 0,6-fache des aktuellen Stroms, wenn die maximale Spannung unter den Spannungen der Vielzahl von Zellen im Batteriemodul den neunten vorgegebenen Wert erreicht, und das Laden des Batteriemoduls mit dem siebten vorgegebenen Wert, bis die maximale Spannung unter den Spannungen der Vielzahl von Zellen im Batteriemodul die Abschaltspannung erreicht;
Laden des Batteriemoduls mit einer zweiten konstanten Leistung, wenn die Batteriezellentemperatur größer oder gleich 35 °C und kleiner als 45 °C ist, Reduzieren des Ladestroms auf das 0,6-fache eines aktuellen Stroms, wenn die maximale Spannung unter den Spannungen der Vielzahl von Zellen im Batteriemodul den neunten vorgegebenen Wert erreicht, zyklisches Durchführen, bis der Ladestrom den siebten vorgegebenen Wert erreicht, des Ladens des Batteriemoduls mit der zweiten konstanten Leistung und des Reduzierens des Ladestroms auf das 0,6-fache des aktuellen Stroms, wenn die maximale Spannung unter den Spannungen der Vielzahl von Zellen im Batteriemodul den neunten vorgegebenen Wert erreicht, und Laden des Batteriemoduls mit dem siebten vorgegebenen Wert, bis die maximale Spannung unter den Spannungen der Vielzahl von Zellen im Batteriemodul die Abschaltspannung erreicht;
Laden des Batteriemoduls mit einer fünften konstanten Leistung, wenn die Batteriezellentemperatur größer oder gleich 45 °C und kleiner als 50 °C ist, Reduzieren des Ladestroms auf das 0,6-fache des aktuellen Stroms, wenn die maximale Spannung unter den Spannungen der Vielzahl von Zellen im Batteriemodul den neunten vorgegebenen Wert erreicht, zyklisches Durchführen, bis der Ladestrom den siebten vorgegebenen Wert erreicht, des Ladens des Batteriemoduls mit der fünften konstanten Leistung und des Reduzierens des Ladestroms auf das 0,6-fache des aktuellen Stroms, wenn die maximale Spannung unter den Spannungen der Vielzahl von Zellen im Batteriemodul den neunten vorgegebenen Wert erreicht, und Laden des Batteriemoduls mit dem siebten vorgegebenen Wert, bis die maximale Spannung unter den Spannungen der Vielzahl von Zellen im Batteriemodul die Abschaltspannung erreicht;
Unterlassen des Ladens, wenn die Batteriezellentemperatur größer als oder gleich 50 °C ist.

5. Ladeverfahren nach Anspruch 4, wobei:
der siebte vorgegebene Wert 0,1 C beträgt, die erste konstante Leistung 1 P beträgt, die zweite konstante Leistung 0,5 P beträgt, die dritte konstante Leistung 0,15 P beträgt, die vierte konstante Leistung 0,3 P beträgt und die fünfte konstante Leistung 0,2 P beträgt, wobei P den Nennenergiewert des Batteriemoduls darstellt;
im ersten Ladeschema der sechste vorgegebene Wert 3,95 V beträgt, der achte vorgegebene Wert 4,00 V beträgt, der neunte vorgegebene Wert 4,10 V beträgt und die Abschaltspannung 4,15 V beträgt; und
im zweiten Ladeschema der sechste vorgegebene Wert 3,40 V beträgt, der achte vorgegebene Wert 3,45 V beträgt, der neunte vorgegebene Wert 3,5 V beträgt und die Abschaltspannung 3,6 V beträgt.

6. Ladeverfahren nach Anspruch 1, wobei der erste vorgegebene Wert 3,6 V beträgt.

7. Ladeverfahren nach Anspruch 1, wobei der erste vorgegebene Wert 3,6 V beträgt;
der zweite vorgegebene Wert 3,4 V beträgt;
der dritte vorgegebene Wert 3 V beträgt;
die erste vorgegebene Dauer 30 Minuten beträgt; und
die fünfte konstante Leistung P beträgt, wobei P den Nennenergiewert des Batteriemoduls darstellt.

8. Ladeverfahren nach Anspruch 3, wobei der zweite vorgegebene Wert 3,4 V beträgt;
der dritte vorgegebene Wert 3 V beträgt;
der vierte vorgegebene Wert 2,0 V beträgt;
der fünfte vorgegebene Wert 3,45 V beträgt;
die zweite vorgegebene Dauer 10 Minuten beträgt; und
die zweite konstante Leistung 0,5 P beträgt, wobei P den Nennenergiewert des Batteriemoduls darstellt.

9. Ladeverfahren für eine Energiespeicher-Stromversorgung, umfassend:
ein Zellspannungs-Ermittlungsmodul (101), das so konfiguriert ist, dass es die Spannung jeder einer Vielzahl von Zellen in einem Batteriepack eines Batteriemoduls ermittelt; und
ein Schemaauswahlmodul (102), das so konfiguriert ist, dass es das Batteriemodul durch Auswählen eines entsprechenden Ladeschemas auf der Grundlage einer niedrigsten Spannung unter den Spannungen der Vielzahl von Zellen lädt,
wobei das entsprechende Ladeschema ein erstes Ladeschema und ein zweites Ladeschema umfasst;
**dadurch gekennzeichnet, dass**
das Auswählen des entsprechenden Ladeschemas auf der Grundlage der niedrigsten Spannung unter den Spannungen der Vielzahl von Zellen Folgendes umfasst:
Entladen des Batteriemoduls mit einer ersten konstanten Leistung, wenn die niedrigste Spannung unter den Spannungen der Vielzahl von Zellen größer oder gleich einem zweiten vorgegebenen Wert und kleiner als ein erster vorgegebener Wert ist, und Ermitteln einer ersten Entladezeit, wenn die niedrigste Spannung unter den Spannungen der Vielzahl von Zellen gleich einem dritten vorgegebenen Wert ist;
Ausführen des zweiten Ladeschemas, wenn die erste Entladezeit größer oder gleich einer ersten vorgegebenen Dauer ist; und
Ausführen des ersten Ladeschemas, wenn die erste Entladezeit kleiner als die erste vorgegebene Dauer ist.

10. Elektronische Vorrichtung, umfassend:
mindestens einen Prozessor (11); und
einen Speicher (12, 13) in Kommunikationsverbindung mit dem mindestens einen Prozessor,
wobei der Speicher (12, 13) ein darauf gespeichertes Computerprogramm enthält, und das Computerprogramm von dem mindestens einen Prozessor (11) ausführbar ist; und
wobei das Computerprogramm, wenn es von dem mindestens einen Prozessor (11) ausgeführt wird, den mindestens einen Prozessor (11) veranlasst, das Ladeverfahren nach einem der Ansprüche 1 bis 8 durchzuführen.

11. Computerlesbares Speichermedium mit darauf gespeicherten Computeranweisungen, wobei die Computeranweisungen, wenn sie von einem Prozessor (11) ausgeführt werden, das Ladeverfahren nach einem der Ansprüche 1 bis 8 implementieren.

## Revendications

1. Procédé de charge d'une alimentation électrique de stockage d'énergie, le procédé de charge comprenant :
l'obtention (S101) de la tension de chacune d'une pluralité de cellules dans un bloc de batteries d'un module de batteries ; et
la charge (S102) du module de batteries par sélection, sur la base de la tension minimale parmi les tensions de la pluralité de cellules, d'un schéma de charge correspondant,
dans lequel le schéma de charge correspondant comprend un premier schéma de charge et un deuxième schéma de charge ;
**caractérisé en ce que**
ladite sélection, sur la base de la tension minimale parmi les tensions de la pluralité de cellules, du schéma de charge correspondant comprend :
la décharge du module de batteries à une première puissance constante lorsque la tension minimale parmi les tensions de la pluralité de cellules est supérieure ou égale à une deuxième valeur prédéterminée et inférieure à une première valeur prédéterminée, et l'obtention d'une première période de décharge lorsque la tension minimale parmi les tensions de la pluralité de cellules est égale à une troisième valeur prédéterminée ;
la mise en œuvre du deuxième schéma de charge lorsque la première période de décharge est supérieure ou égale à une première durée prédéterminée ; et
la mise en œuvre du premier schéma de charge lorsque la première période de décharge est inférieure à la première durée prédéterminée.

2. Procédé de charge selon la revendication 1, dans lequel ladite sélection, sur la base de la tension minimale parmi les tensions de la pluralité de cellules, du schéma de charge correspondant comprend :
la mise en œuvre du premier schéma de charge lorsque la tension minimale parmi les tensions de la pluralité de cellules est supérieure ou égale à la première valeur prédéterminée.

3. Procédé de charge selon la revendication 1, dans lequel ladite sélection, sur la base de la tension minimale parmi les tensions de la pluralité de cellules, du schéma de charge correspondant comprend :
la charge du module de batteries à une deuxième puissance constante lorsque la tension minimale parmi les tensions de la pluralité de cellules est supérieure ou égale à une quatrième valeur prédéterminée et inférieure à une deuxième valeur prédéterminée, et l'obtention d'une période de charge lorsque la tension minimale parmi les tensions de la pluralité de cellules est égale à une cinquième valeur prédéterminée ;
la mise en œuvre du deuxième schéma de charge lorsque la période de charge est supérieure ou égale à une deuxième durée prédéterminée ;
la décharge du module de batteries à une première puissance constante lorsque la période de charge est inférieure à la deuxième durée prédéterminée, et l'obtention d'une deuxième période de décharge lorsque la tension minimale parmi les tensions de la pluralité de cellules est égale à une troisième valeur prédéterminée ;
la mise en œuvre du deuxième schéma de charge lorsque la deuxième période de décharge est supérieure ou égale à la deuxième durée prédéterminée ; et
la mise en œuvre du premier schéma de charge lorsque la deuxième période de décharge est inférieure à la deuxième durée prédéterminée.

4. Procédé de charge selon la revendication 1, dans lequel chacun du premier schéma de charge et du deuxième schéma de charge comprend :
l'obtention de la température des cellules du module de batteries ;
la non-mise en œuvre de la charge lorsque la température des cellules est inférieure à 0 °C ;
la charge du module de batteries à une troisième puissance constante lorsque la température des cellules est supérieure ou égale à 0 °C et inférieure à 10 °C, la réduction du courant de charge à 0,6 fois le courant actuel lorsque la tension maximale parmi les tensions de la pluralité de cellules dans le module de batteries atteint une sixième valeur prédéterminée, la mise en œuvre cyclique, jusqu'à ce que le courant de charge atteigne une septième valeur prédéterminée, de ladite charge du module de batteries à la troisième puissance constante et de ladite réduction du courant de charge à 0,6 fois le courant actuel lorsque la tension maximale parmi les tensions de la pluralité de cellules dans le module de batteries atteint la sixième valeur prédéterminée, et la charge du module de batteries à la septième valeur prédéterminée jusqu'à ce que la tension maximale parmi les tensions de la pluralité de cellules dans le module de batteries atteigne la tension de coupure ;
la charge du module de batteries à une quatrième puissance constante lorsque la température des cellules est supérieure ou égale à 10 °C et inférieure à 20 °C, la réduction du courant de charge à 0,6 fois le courant actuel lorsque la tension maximale parmi les tensions de la pluralité de cellules dans le module de batteries atteint une huitième valeur prédéterminée, la mise en œuvre cyclique, jusqu'à ce que le courant de charge atteigne la septième valeur prédéterminée, de ladite charge du module de batteries à la quatrième puissance constante et de ladite réduction du courant de charge à 0,6 fois le courant actuel lorsque la tension maximale parmi les tensions de la pluralité de cellules dans le module de batteries atteint le huitième valeur prédéterminée, et la charge du module de batteries à la septième valeur prédéterminée jusqu'à ce que la tension maximale parmi les tensions de la pluralité de cellules dans le module de batteries atteigne la tension de coupure ;
la charge du module de batteries à une première puissance constante lorsque la température des cellules est supérieure ou égale à 20 °C et inférieure à 35 °C, la réduction du courant de charge à 0,6 fois le courant actuel lorsque la tension maximale parmi les tensions de la pluralité de cellules dans le module de batteries atteint une neuvième valeur prédéterminée, la mise en œuvre cyclique, jusqu'à ce que le courant de charge atteigne la septième valeur prédéterminée, de ladite charge du module de batteries à la première puissance constante et de ladite réduction du courant de charge à 0,6 fois le courant actuel lorsque la tension maximale parmi les tensions de la pluralité de cellules dans le module de batteries atteint la neuvième valeur prédéterminée, et la charge du module de batteries à la septième valeur prédéterminée jusqu'à ce que la tension maximale parmi les tensions de la pluralité de cellules dans le module de batteries atteigne la tension de coupure ;
la charge du module de batteries à une deuxième puissance constante lorsque la température des cellules est supérieure ou égale à 35 °C et inférieure à 45 °C, la réduction du courant de charge à 0,6 fois le courant actuel lorsque la tension maximale parmi les tensions de la pluralité de cellules dans le module de batteries atteint la neuvième valeur prédéterminée, la mise en œuvre cyclique, jusqu'à ce que le courant de charge atteigne la septième valeur prédéterminée, de ladite charge du module de batteries à la deuxième puissance constante et de ladite réduction du courant de charge à 0,6 fois le courant actuel lorsque la tension maximale parmi les tensions de la pluralité de cellules dans le module de batteries atteint la neuvième valeur prédéterminée, et la charge du module de batteries à la septième valeur prédéterminée jusqu'à ce que la tension maximale parmi les tensions de la pluralité de cellules dans le module de batteries atteigne la tension de coupure ;
la charge du module de batteries à une cinquième puissance constante lorsque la température des cellules est supérieure ou égale à 45 °C et inférieure à 50 °C, la réduction du courant de charge à 0,6 fois le courant actuel lorsque la tension maximale parmi les tensions de la pluralité de cellules dans le module de batteries atteint la neuvième valeur prédéterminée, la mise en œuvre cyclique, jusqu'à ce que le courant de charge atteigne la septième valeur prédéterminée, de ladite charge du module de batteries à la cinquième puissance constante et de ladite réduction du courant de charge à 0,6 fois le courant actuel lorsque la tension maximale parmi les tensions de la pluralité de cellules dans le module de batteries atteint la neuvième valeur prédéterminée, et la charge du module de batteries à la septième valeur prédéterminée jusqu'à ce que la tension maximale parmi les tensions de la pluralité de cellules dans le module de batteries atteigne la tension de coupure ; et
la non-mise en œuvre de la charge lorsque la température des cellules est supérieure ou égale à 50 °C.

5. Procédé de charge selon la revendication 4, dans lequel :
la septième valeur prédéterminée est 0,1 C, la première puissance constante est 1P, la deuxième puissance constante est 0,5P, la troisième puissance constante est 0,15P, la quatrième puissance constante est 0,3P et la cinquième puissance constante est 0,2P, où P représente la valeur d'énergie nominale du module de batteries ;
dans le premier schéma de charge, la sixième valeur prédéterminée est 3,95 V, la huitième valeur prédéterminée est 4,00 V, la neuvième valeur prédéterminée est 4,10 V et la tension de coupure est 4,15 V ; et
dans le deuxième schéma de charge, la sixième valeur prédéterminée est 3,40 V, la huitième valeur prédéterminée est 3,45 V, la neuvième valeur prédéterminée est 3,5 V et la tension de coupure est 3,6 V.

6. Procédé de charge selon la revendication 1, dans lequel la première valeur prédéterminée est 3,6 V.

7. Procédé de charge selon la revendication 1, dans lequel la première valeur prédéterminée est 3,6 V ;
la deuxième valeur prédéterminée est 3,4 V ;
la troisième valeur prédéterminée est 3 V ;
la première durée prédéterminée est 30 min ; et
la première puissance constante est P, où P représente la valeur d'énergie nominale du module de batteries.

8. Procédé de charge selon la revendication 3, dans lequel la deuxième valeur prédéterminée est 3,4 V ;
la troisième valeur prédéterminée est 3 V ;
la quatrième valeur prédéterminée est 2,0 V ;
la cinquième valeur prédéterminée est 3,45 V ;
la deuxième durée prédéterminée est 10 min ; et
la deuxième puissance constante est 0,5P, où P représente la valeur d'énergie nominale du module de batteries.

9. Appareil de charge pour une alimentation électrique de stockage d'énergie, comprenant :
un module d'obtention de tension de cellule (101) configuré pour obtenir la tension de chacune d'une pluralité de cellules dans un bloc de batteries d'un module de batteries ; et
un module de sélection de schéma (102) configuré pour charger le module de batteries par sélection, sur la base de la tension minimale parmi les tensions de la pluralité de cellules, d'un schéma de charge correspondant,
dans lequel le schéma de charge correspondant comprend un premier schéma de charge et un deuxième schéma de charge ;
**caractérisé en ce que**
ladite sélection, sur la base de la tension minimale parmi les tensions de la pluralité de cellules, du schéma de charge correspondant comprend :
la décharge du module de batteries à une première puissance constante lorsque la tension minimale parmi les tensions de la pluralité de cellules est supérieure ou égale à une deuxième valeur prédéterminée et inférieure à une première valeur prédéterminée, et l'obtention d'une première période de décharge lorsque la tension minimale parmi les tensions de la pluralité de cellules est égale à une troisième valeur prédéterminée ;
la mise en œuvre du deuxième schéma de charge lorsque la première période de décharge est supérieure ou égale à une première durée prédéterminée ; et
la mise en œuvre du premier schéma de charge lorsque la première période de décharge est inférieure à la première durée prédéterminée.

10. Dispositif électronique, comprenant :
au moins un processeur (11) ; et
une mémoire (12, 13) en connexion de communication avec ledit au moins un processeur,
dans lequel la mémoire (12, 13) stocke un programme informatique, le programme informatique étant exécutable par ledit au moins un processeur (11) ; et
dans lequel le programme informatique, lorsqu'il est exécuté par ledit au moins un processeur (11), amène ledit au moins un processeur (11) à mettre en œuvre le procédé de charge selon l'une quelconque des revendications 1 à 8.

11. Support de stockage lisible par ordinateur, sur lequel sont stockées des instructions informatiques, dans lequel les instructions informatiques, lorsqu'elles sont exécutées par un processeur (11), mettent en œuvre le procédé de charge selon l'une quelconque des revendications 1 à 8.
